# EUROPÄISCHE PATENTANMELDUNG

(11) **EP 4 567 653 A1**
(43) Veröffentlichungstag der Anmeldung: **11.06.2025**
(21) Anmeldenummer: 24212905.4
(22) Anmeldetag: 14.11.2024
(51) Int. Cl.: G06F 30/15, G06F 30/20, G06F 111/08, G06F 119/02

(54) **VORRICHTUNG UND COMPUTERIMPLEMENTIERTES VERFAHREN ZUR BEREITSTELLUNG VON ROUTEN FÜR EINE ERPROBUNG EINER FAHRZEUGKOMPONENTE ODER EINES FAHRZEUGS**

(30) Priorität: 29.11.2023 DE 102023211894
(71) Anmelder: Robert Bosch GmbH, 70442 Stuttgart (DE)
(72) Erfinder: Schomberg, Susanne, 74321 Bietigheim-Bissingen (DE); Leyendecker, Thomas, 70806 Kornwestheim (DE); Sandmann, Kai, 70806 Kornwestheim (DE)

(57) **Zusammenfassung**

Vorrichtung und computerimplementiertes Verfahren zur Bereitstellung von Routen für eine Erprobung einer Fahrzeugkomponente oder eines Fahrzeugs, ein Satz von Routen bereitgestellt wird (304), wobei die Routen jeweils mit Werten von ersten Größen assoziiert sind, wobei die ersten Größen jeweils eine Routeneigenschaft, insbesondere eine Fahrdauer, eine Fahrtlänge, eine Abfahrzeit, einen Wochentag, eine geographische Region, einen Startpunkt oder einen Endpunkt oder geo-referenzierte Telemetriedaten der jeweiligen Route charakterisieren, wobei die Routen jeweils mit Werten von zweiten Größen assoziiert sind, wobei die zweiten Größen jeweils ein Routenmerkmal, insbesondere einen Straßentyp, eine Neigung oder eine Kurvigkeit, der jeweiligen Route charakterisieren, wobei für mehrere der ersten Größen ein Soll-Wert bereitgestellt wird (302), wobei abhängig von den mehreren Soll-Werten eine Menge von Routen aus dem Satz ausgewählt wird (306), die jeweils mit einem Wert der ersten Größe, für die der Soll-Wert bereitgestellt wird, assoziiert ist, der gleich dem jeweiligen Soll-Wert ist oder um weniger als eine Toleranz vom jeweiligen Soll-Wert abweicht, wobei Routen aus der Menge von Routen abhängig von den zweiten Größen in Gruppen unterteilt werden.

## Beschreibung

### Stand der Technik

Die Erfindung geht von einer Vorrichtung und einem computerimplementierten Verfahren zur Bereitstellung von Routen für eine Erprobung einer Fahrzeugkomponente oder eines Fahrzeugs aus.

DE 199 10 967 C1 offenbart ein Verfahren zum Simulieren eines Verhaltens eines Fahrzeugs auf einer Fahrbahn.

### Offenbarung der Erfindung

Ein computerimplementiertes Verfahren zur Bereitstellung von Routen für eine Erprobung einer Fahrzeugkomponente oder eines Fahrzeugs sieht vor, dass ein Satz von Routen bereitgestellt wird, wobei die Routen jeweils mit Werten von ersten Größen assoziiert sind, wobei die ersten Größen jeweils eine Routeneigenschaft, insbesondere eine Fahrdauer, eine Fahrtlänge, eine Abfahrzeit, einen Wochentag, eine geographische Region, einen Startpunkt oder einen Endpunkt oder geo-referenzierten Telemetriedaten der jeweiligen Route charakterisieren, wobei die Routen jeweils mit Werten von zweiten Größen assoziiert sind, wobei die zweiten Größen jeweils ein Routenmerkmal, insbesondere einen Straßentyp, eine Neigung oder eine Kurvigkeit, der jeweiligen Route charakterisieren, wobei für eine oder vorzugsweise mehrere der ersten Größen jeweils ein Soll-Wert bereitgestellt wird, wobei abhängig von den Soll-Werten eine Menge von Routen aus dem Satz ausgewählt wird, die jeweils mit einem jeweiligen Wert der ersten Größen, für die ein Soll-Wert bereitgestellt wird, assoziiert ist, der gleich dem jeweiligen Soll-Wert ist oder um weniger als eine Toleranz vom jeweiligen Soll-Wert abweicht, wobei Routen aus der Menge von Routen abhängig von den zweiten Größen in Gruppen unterteilt werden, und wobei, vorzugsweise je Gruppe, wenigstens eine Route für die Erprobung bereitgestellt wird. Dadurch werden für die Erprobung geeignete Routen identifiziert und für die Erprobung nutzbar gemacht. Insbesondere kann dabei die Auswahl der für die Erprobung bereitgestellten Routen mit Hilfe einer Clusteranalyse erfolgen.

Der Satz von Routen umfasst insbesondere für diese Routen jeweils die Informationen aus den ersten Größen und den zweiten Größen, also die konkreten Routeneigenschaften wie insbesondere Fahrdauer, Fahrtlänge, eine Abfahrzeit, Wochentag, geographische Region, Startpunkt oder Endpunkt oder geo-referenzierten Telemetriedaten der jeweiligen Route beziehungsweise die konkreten Routenmerkmalen wie insbesondere Straßentyp, Neigung oder Kurvigkeit. Vorzugsweise umfasst der Satz von Routen ferner die geo-referenzierten Telemetriedaten dieser Routen, insbesondere GPS-Daten zu den Routen.

Beispielsweise wird eine vorgegebene Anzahl von Routen aus dem Satz ausgewählt, wobei die Menge von Routen die vorgegebene Anzahl von Routen umfasst, und/oder dass die Menge von Routen in eine vorgegebene Anzahl von Gruppen unterteilt wird.

Durch die Folgenden beispielhaften Maßnahmen wird die Auswahl der vorgegebenen Anzahl von Routen erreicht.

In einem Beispiel ist vorgesehen, dass der Soll-Wert für die erste Größe bereitgestellt wird, wobei, wenn festgestellt wird, dass eine Anzahl der Routen aus dem Satz von Routen, die mit einem Wert der ersten Größe assoziiert sind, der gleich dem Soll-Wert ist oder um weniger als die Toleranz vom Sollwert abweicht, gleich der vorgegebenen Anzahl von Routen ist, die vorgegebene Anzahl von Routen für die Menge von Routen bereitgestellt wird, oder dass der Soll-Wert für die mehreren ersten Größen bereitgestellt wird, wobei, wenn festgestellt wird, dass eine Anzahl der Routen aus dem Satz von Routen bereitgestellt wird, die mit Werten der ersten Größen assoziiert sind, die jeweils gleich dem für die jeweilige erste Größe vorgegebenen Soll-Wert sind, oder um weniger als die Toleranz vom jeweils vorgegebenen Soll-Wert abweichen, gleich der vorgegebenen Anzahl von Routen ist, die vorgegebene Anzahl von Routen für die Menge von Routen bereitgestellt wird.

In einem Beispiel ist vorgesehen, dass der Soll-Wert für die erste Größe bereitgestellt wird, wobei, wenn festgestellt wird, dass eine Anzahl der Routen aus dem Satz von Routen, die mit einem Wert der ersten Größe assoziiert sind, der gleich dem Soll-Wert ist oder um weniger als die Toleranz vom Sollwert abweicht, geringer als die vorgegebene Anzahl von Routen ist, die Toleranz erhöht und die Routen aus dem Satz von Routen ausgewählt werden, bis die Anzahl von Routen aus dem Satz von Routen, die mit einem Wert der ersten Größe assoziiert sind, der gleich dem Soll-Wert ist oder um weniger als die erhöhte Toleranz vom Sollwert abweicht, gleich der vorgegebenen Anzahl ist, oder dass der Soll-Wert für die mehreren ersten Größen bereitgestellt wird, wobei, wenn festgestellt wird, dass eine Anzahl der Routen aus dem Satz von Routen bereitgestellt wird, die mit Werten der ersten Größen assoziiert sind, die jeweils gleich dem für die jeweilige erste Größe vorgegebenen Soll-Wert sind, oder um weniger als die Toleranz vom jeweils vorgegebenen Soll-Wert abweichen, geringer als die vorgegebene Anzahl von Routen ist, die Toleranz erhöht und die Routen aus dem Satz von Routen ausgewählt werden, bis die Anzahl von Routen aus dem Satz von Routen, die mit Werten der ersten Größen assoziiert sind, die jeweils gleich dem für die jeweilige erste Größe vorgegebenen Soll-Wert sind, oder um weniger als die Toleranz vom jeweils vorgegebenen Soll-Wert abweichen, gleich der vorgegebene Anzahl von Routen ist.

In einem Beispiel ist vorgesehen, dass der Soll-Wert für die erste Größe bereitgestellt wird, wobei, wenn festgestellt wird, dass eine Anzahl der Routen aus dem Satz von Routen, die mit einem Wert der ersten Größe assoziiert sind, der gleich dem Soll-Wert ist oder um weniger als die Toleranz vom Sollwert abweicht, größer als die vorgegebene Anzahl von Routen ist, die Toleranz reduziert und die Routen aus dem Satz von Routen ausgewählt werden, bis die Anzahl von Routen aus dem Satz von Routen, die mit einem Wert der ersten Größe assoziiert sind, der gleich dem Soll-Wert ist oder um weniger als die erhöhte Toleranz vom Sollwert abweicht, gleich der vorgegebenen Anzahl ist, oder dass der Soll-Wert für die mehreren ersten Größen bereitgestellt wird, wobei, wenn festgestellt wird, dass eine Anzahl der Routen aus dem Satz von Routen bereitgestellt wird, die mit Werten der ersten Größen assoziiert sind, die jeweils gleich dem für die jeweilige erste Größe vorgegebenen Soll-Wert sind, oder um weniger als die Toleranz vom jeweils vorgegebenen Soll-Wert abweichen, größer als die vorgegebene Anzahl von Routen ist, die Toleranz reduziert und die Routen aus dem Satz von Routen ausgewählt werden, bis die Anzahl von Routen aus dem Satz von Routen, die mit Werten der ersten Größen assoziiert sind, die jeweils gleich dem für die jeweilige erste Größe vorgegebenen Soll-Wert sind, oder um weniger als die Toleranz vom jeweils vorgegebenen Soll-Wert abweichen, gleich der vorgegebene Anzahl von Routen ist.

In einem Beispiel ist vorgesehen, dass, die Anzahl der Gruppen von einem Benutzer vorgegeben wird. Dadurch kann der Benutzer angeben, ob die Erprobung effizient mit einer geringen Anzahl von Routen oder ausführlich mit einer demgegenüber höheren Anzahl von Routen ausgeführt wird. In einem Beispiel ist vorgesehen, dass, eine Varianz, insbesondere Standardabweichung, der Werte einer der zweiten Größen bestimmt wird, und die Anzahl der Gruppen abhängig von der Varianz, insbesondere der Standardabweichung, vorgegeben wird. Beispielsweise wird die Anzahl bei geringer Varianz, insbesondere Standardabweichung, reduziert und bei demgegenüber größerer Varianz, insbesondere Standardabweichung, erhöht. Dies verbessert das Ergebnis der Erprobung.

Beispielsweise wird eine jeweilige Varianz, insbesondere Standardabweichung, der Werte für wenigstens zwei der zweiten Größen bestimmt, wobei die Anzahl der Gruppen abhängig von einer Summe der Varianzen, insbesondere der Standardabweichungen, vorgegeben wird.

Beispielsweise ist vorgesehen, dass der für die eine oder vorzugsweise mehrere der ersten Größen jeweils bereitgestellte Soll-Wert aus einer Fahrt in einem Fahrtenbuch entnommen wird, wobei die Fahrt die Routeneigenschaften, insbesondere die Fahrdauer, die Fahrtlänge, die Abfahrzeit, den Wochentag, die geographische Region, den Startpunkt oder den Endpunkt oder geo-referenzierten Telemetriedaten, der Route unvollständig, insbesondere ohne die geographische Region, ohne den Startpunkt und/oder ohne den Endpunkt, und/oder ohne die geo-referenzierten Telemetriedaten der Route, definiert, wobei die bereitgestellte Route die im Fahrtenbuch unvollständig definierten Routeneigenschaften der Fahrt definiert, und wobei die unvollständigen Routeneigenschaften der Fahrt durch die Routeneigenschaften aus der bereitgestellten Route ergänzt oder die Routeneigenschaften der Fahrt aus dem Fahrtenbuch durch die Routeneigenschaften der bereitgestellten Route ersetzt werden. Das Verfahren kann für ein oder mehrere Fahrten des Fahrtenbuchs angewendet werden, um die Informationen zu den jeweiligen Fahrten vorteilhafterweise durch die bereitgestellten Routen und insbesondere den Informationsgehalt der bereitgestellten Routen zu erweitern. Vorzugsweise kann die Erweiterung der Informationen zu den Fahrten auch die Aufnahme der geo-referenzierten Telemetriedaten der bereitgestellten Routen umfassen. Durch das Verfahren kann somit ein erweitertes Fahrtenbuch bereitgestellt werden, wobei entweder ein neues Fahrtenbuch mit den über das Verfahren inhaltlich ergänzten Fahrten erstellt oder Informationen der Fahrten in dem ursprünglichen Fahrtenbuch ergänzt oder ersetzt werden. Vorteilhafterweise kann somit ein insbesondere anonymisiertes Fahrtenbuch, beispielsweise anonymisiert durch Entfernung von geographischer Region, Startpunkt oder Endpunkt oder geo-referenzierten Telemetriedaten der jeweiligen Route, durch das Verfahren wieder zu einem vollständigeren Fahrtenbuch erweitert werden, indem durch das Verfahren plausible Informationen, insbesondere plausible Telemetriedaten und plausible Werte für oben beschriebene Routenmerkmale, ergänzt werden.

Die Routeneigenschaft wird beispielsweise für eine Vielzahl von Fahrten bereitgestellt, wobei je Fahrt, die wenigstens eine Route aus dem Satz von Routen für die Erprobung bereitgestellt und mit der jeweiligen Fahrt assoziiert gespeichert wird. Dadurch ist das Ergebnis der Auswahl für die Erprobung schnell verfügbar.

Es kann vorgesehen sein, dass je Gruppe wenigstens eine Route für die Erprobung bereitgestellt wird oder dass die Erprobung mit wenigstens einer Route je Gruppe durchgeführt wird.

Es kann vorgesehen sein, dass die Werte der zweiten Größen je Route aus der Menge von Routen auf Punkte in einem Zustandsraum abgebildet werden, die mit der jeweiligen Route assoziiert sind, wobei Punktemengen mit einem jeweiligen Schwerpunkt im Zustandsraum bestimmt werden, die mit je einer der Gruppen assoziiert sind, wobei die jeweilige Punktemenge die Punkte umfasst, die näher zum Schwerpunkt der jeweiligen Punktemenge angeordnet sind, als zu den Schwerpunkten anderer Punktemengen, wobei eine jeweilige Gruppe der Gruppen die Routen umfasst, die mit den Punkten der Punktemenge assoziiert sind, mit der die jeweilige Gruppe assoziiert ist.

Eine Vorrichtung zur Bereitstellung von Routen für eine Erprobung einer Fahrzeugkomponente oder eines Fahrzeugs umfasst wenigstens einen Prozessor und wenigstens einen Speicher, wobei der wenigstens eine Speicher vom wenigstens einen Prozessor ausführbare Instruktionen umfasst, bei deren Ausführung durch den wenigstens einen Prozessor die Vorrichtung das Verfahren ausführt.

Es kann ein Computerprogramm vorgesehen sein, das computerlesbare Instruktionen umfasst, bei deren Ausführung durch einen Computer auf dem Computer das Verfahren ausgeführt wird.

Eine Datenstruktur zur Bereitstellung von Routen für eine Erprobung einer Fahrzeugkomponente oder eines Fahrzeugs sieht vor, dass die Datenstruktur Datenfelder umfasst, wobei die Datenstruktur in Datenfeldern einen Satz von Routen bereitstellt, wobei die Routen jeweils mit Werten von ersten Größen assoziiert sind, wobei die ersten Größen jeweils eine Routeneigenschaft, insbesondere eine Fahrdauer, eine Fahrtlänge, eine Abfahrzeit, einen Wochentag, eine geographische Region, einen Startpunkt oder einen Endpunkt oder geo-referenzierte Telemetriedaten der jeweiligen Route charakterisieren, wobei die Routen jeweils mit Werten von zweiten Größen assoziiert sind, wobei die zweiten Größen jeweils ein Routenmerkmal, insbesondere einen Straßentyp, eine Neigung oder eine Kurvigkeit, der jeweiligen Route charakterisieren, wobei die Datenstruktur Datenfelder für eine abhängig von einem Soll-Wert für die erste Größen aus dem Satz ausgewählte Menge von Routen bereitgestellt wird, die Routen umfasst, die mit einem Wert der ersten Größe, für die der Soll-Wert bereitgestellt wird, assoziiert sind, der gleich dem Soll-Wert ist oder um weniger als eine Toleranz vom Sollwert abweicht, wobei die Datenstruktur Datenfelder für Gruppen von Routen umfasst, in die Routen aus der Menge von Routen abhängig von den zweiten Größen unterteilt werden, wobei die Datenstruktur Datenfelder für Werte der zweiten Größen je Route umfasst und wobei die Datenstruktur Datenfelder für vorzugsweise je Gruppe wenigstens eine Route umfasst, die für die Erprobung bereitgestellt wird.

Vorzugsweise ist vorgesehen, dass die Datenstruktur Datenfelder, die aus der Menge von Routen auf Punkte in einem Zustandsraum abgebildet werden, umfasst, die mit der jeweiligen Route assoziiert sind, wobei die Datenstruktur Datenfelder für Punktemengen mit einem jeweiligen Schwerpunkt im Zustandsraum umfasst, die mit je einer der Gruppen assoziiert sind, wobei die jeweilige Punktemenge die Punkte umfasst, die näher zum Schwerpunkt der jeweiligen Punktemenge angeordnet sind, als zu den Schwerpunkten anderer Punktemengen, wobei eine jeweilige Gruppe der Gruppen die Routen umfasst, die mit den Punkten der Punktemenge assoziiert sind, mit der die jeweilige Gruppe assoziiert ist, und wobei die Datenstruktur Datenfelder für je Gruppe wenigstens eine Route umfasst, die für die Erprobung bereitgestellt wird.

Weitere vorteilhafte Ausführungsformen sind der folgenden Beschreibung und der Zeichnung entnehmbar. In der Zeichnung zeigt:
Fig. 1 eine schematische Darstellung einer zur Bereitstellung von Routen für eine Erprobung einer Fahrzeugkomponente oder eines Fahrzeugs,
Fig. 2 beispielhafte Cluster der Routen aus dem Satz von Routen nach mehreren Routenmerkmalen,
Fig. 3 ein Flussdiagramm mit Schritten eines Verfahrens zur Bereitstellung von Routen für die Erprobung der Fahrzeugkomponente oder des Fahrzeugs.

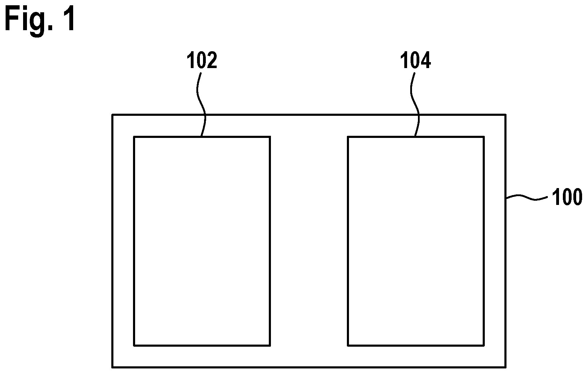

In Figur 1 ist eine Vorrichtung 100 zur Bereitstellung von Routen für eine Erprobung einer Fahrzeugkomponente oder eines Fahrzeugs schematisch dargestellt.

Die Vorrichtung 100 umfasst wenigstens einen Prozessor 102 und wenigstens einen Speicher 104.

Der wenigstens eine Speicher 104 umfasst vom wenigstens einen Prozessor 102 ausführbare Instruktionen, bei deren Ausführung durch den wenigstens einen Prozessor 102 die Vorrichtung 100 ein Verfahren zur Bereitstellung von Routen insbesondere eines synthetischen Fahrtenbuchs für die Erprobung ausführt.

Die Vorrichtung 100 umfasst z.B. ein Computer. Ein vom Computer ausführbares Computerprogramm umfasst z.B. die Instruktionen.

Die Vorrichtung 100 ist ausgebildet, Routen aus einem Satz von Routen auszuwählen.

Die Routen aus dem Satz von Routen sind mit wenigstens einer ersten Größe assoziiert, die eine Routeneigenschaft charakterisiert.

Im Beispiel sind die Routen mit einer oder mehreren der folgenden Routeneigenschaften assoziiert:
Fahrdauer,
Fahrtlänge,
Abfahrzeit,
Wochentag,
geographische Region,
Startpunkt,
Endpunkt,
geo-referenzierten Telemetriedaten.

Ein jeweiliger Wert der jeweiligen ersten Größe gibt für die jeweilige Route die jeweilige Routeneigenschaft an.

Die Vorrichtung 100 ist ausgebildet, die Routen abhängig von wenigstens einer der ersten Größen und einem Soll-Wert für die wenigstens eine der ersten Größen auszuwählen.

Die Vorrichtung 100 ist beispielsweise ausgebildet, eine Menge von Routen abhängig von wenigstens einer der ersten Größen aus dem Satz von Routen auszuwählen.

Die Routen aus dem Satz von Routen sind mit wenigstens einer zweiten Größe assoziiert, die ein Routenmerkmal charakterisiert. Im Beispiel sind die Routen mit einem oder mehreren der folgenden Routenmerkmale assoziiert:
erster Straßentyp, z.B. Autobahn,
zweiter Straßentyp, z.B. Stadt,
dritter Straßentyp, z.B. Land,
Neigung,
Kurvigkeit.

Ein jeweiliger Wert der jeweiligen zweiten Größe gibt für die jeweilige Route das jeweilige Routenmerkmal an.

Die Vorrichtung 100 ist beispielsweise ausgebildet, eine Varianz der Werte der zweiten Größe je Routenmerkmal zu bestimmen und eine Anzahl von Gruppen von Routen, die in der Menge von Routen bestimmt werden, abhängig von der Varianz oder einer Summe der für die Routenmerkmale bestimmten Varianzen zu bestimmen. Die Varianz ist insbesondere eine Standardabweichung.

Die Vorrichtung 100 ist beispielsweise ausgebildet, die Routen nach den Routenmerkmalen in die Gruppen zu unterteilen.

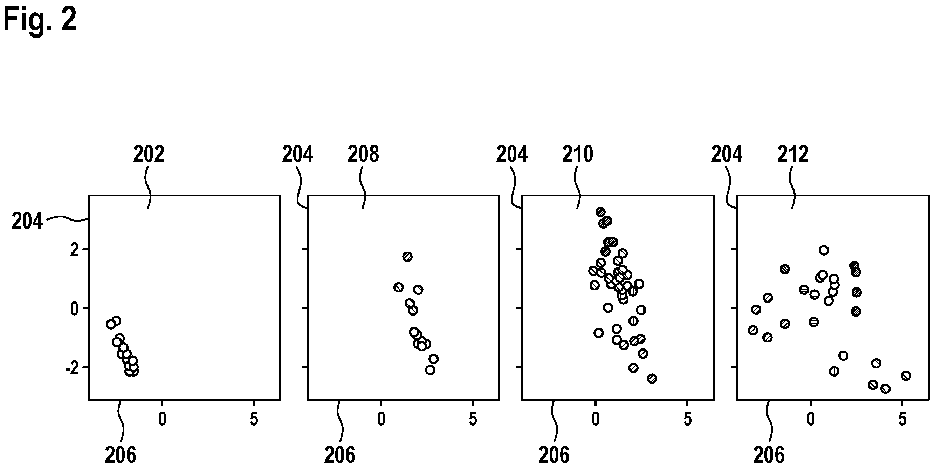

In Figur 2 sind als Beispiel für die Gruppen beispielhafte Cluster der Routen aus der Menge von Routen nach mehreren Routenmerkmalen dargestellt. Ein erstes Beispiel 202 umfasst N=1 Cluster für ein erstes Routenmerkmal 204 und ein zweites Routenmerkmal 206. Ein zweites Beispiel 208 umfasst N=3 Cluster für das erste Routenmerkmal 204 und das zweite Routenmerkmal 206. Ein drittes Beispiel 210 umfasst N=5 Cluster für das erste Routenmerkmal 204 und das zweite Routenmerkmal 206. Ein viertes Beispiel 212 umfasst N=7 Cluster für das erste Routenmerkmal 204 und das zweite Routenmerkmal 206.

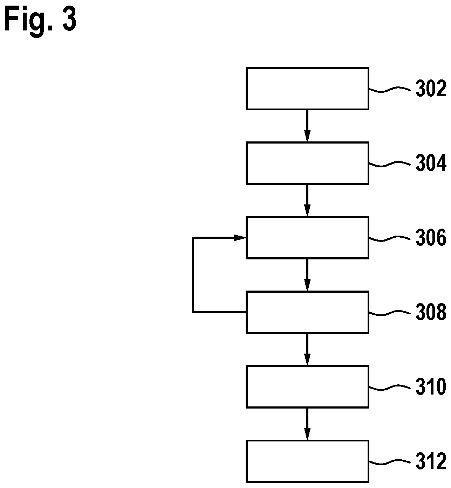

In Figur 3 ist ein Flussdiagramm mit Schritten eines Verfahrens zur Bereitstellung von Routen für die Erprobung der Fahrzeugkomponente oder des Fahrzeugs dargestellt.

Das Verfahren umfasst einen Schritt 302.

Im Schritt 302 wird der Soll-Wert für wenigstens eine der ersten Größen bereitgestellt.

Beispielsweise wird der Soll-Wert insbesondere aus einem anonymisierten Fahrtenbuch, für mehrere erste Größen bereitgestellt. Beispielsweise definiert der Soll-Wert eine Routeneigenschaft, die das anonymisierte Fahrtenbuch umfasst. Das anonymisierte Fahrtenbuch umfasst im Beispiel nicht alle für die Erprobung erforderlichen Routeneigenschaften.

Das Verfahren umfasst einen Schritt 304.

Im Schritt 304 wird der Satz von Routen bereitgestellt.

Die Routen umfassen im Beispiel die für die Erprobung erforderlichen Routeneigenschaften.

Die Routen sind jeweils mit Werten von ersten Größen assoziiert. Die ersten Größen charakterisieren jeweils eine Routeneigenschaft der jeweiligen Route.

Beispielsweise charakterisiert eine der ersten Größen eine Fahrdauer der jeweiligen Route. Die erste Größe gibt die Fahrtdauer z.B. nummerisch insbesondere in Stunden und/oder Minuten an.

Beispielsweise charakterisiert eine der ersten Größen eine Fahrtlänge der jeweiligen Route. Die erste Größe gibt die Fahrtlänge z.B. nummerisch insbesondere in Stunden und/oder Minuten an.

Beispielsweise charakterisiert eine der ersten Größen eine Abfahrzeit der jeweiligen Route. Die erste Größe gibt die Abfahrzeit z.B. nummerisch insbesondere in Stunden und/oder Minuten an.

Beispielsweise charakterisiert eine der ersten Größen einen Wochentag der jeweiligen Route. Die erste Größe gibt den Wochentag z.B. als Text, der den Namen des Wochentags angibt, an.

Beispielsweise charakterisiert eine der ersten Größen eine geographische Region der jeweiligen Route. Die erste Größe gibt die geographische Region z.B. als Text, der den Namen der Region angibt, an.

Beispielsweise charakterisiert eine der ersten Größen einen Startpunkt der jeweiligen Route. Die erste Größe gibt den Startpunkt z.B. als Text, der den Namen des Startpunkts angibt, oder nummerisch, z.B. als Koordinaten, z.B., eines globalen Satellitennavigationssystems wie GPS, an.

Beispielsweise charakterisiert eine der ersten Größen einen Endpunkt der jeweiligen Route. Die erste Größe gibt den Endpunkt z.B. als Text, der den Namen des Endpunkts angibt, oder nummerisch, z.B. als Koordinaten, z.B., eines globalen Satellitennavigationssystems wie GPS, an.

Beispielsweise charakterisiert eine der ersten Größen geo-referenzierten Telemetriedaten der jeweiligen Route.

Die Routen sind jeweils mit Werten von zweiten Größen assoziiert.

Die zweiten Größen charakterisieren jeweils ein Routenmerkmal der jeweiligen Route.

Beispielsweise charakterisiert eine der zweiten Größen einen Straßentyp der jeweiligen Route. Die zweite Größe gibt den Straßentyp z.B. nummerisch, insbesondere als Prozentzahl zwischen 0% und 100% an.

Beispielsweise charakterisiert eine der zweiten Größen eine Neigung der jeweiligen Route. Die zweite Größe gibt die Neigung z.B. nummerisch, insbesondere als Prozentzahl zwischen 0% und 100% an.

Beispielsweise charakterisiert eine der zweiten Größen eine Kurvigkeit der jeweiligen Route. Die zweite Größe gibt die Kurvigkeit z.B. nummerisch, insbesondere als Krümmung je Meter an.

Es kann vorgesehen sein, dass die zweiten Größen normalisiert sind. Beispielsweise werden die Angaben der jeweiligen zweiten Größe um einen Mittelwert von Null mit einer Varianz von 1 normalisiert angegeben.

Das Verfahren umfasst einen Schritt 306.

Im Schritt 306 wird wenigstens eine Route aus dem Satz ausgewählt.

Im Beispiel wird die Menge von Routen abhängig von mehreren Soll-Werten bestimmt.

Bevorzugt werden die Soll-Werte für die ersten Größen bestimmt, welche die Routeneigenschaften Fahrdauer, Fahrtlänge, Abfahrzeit, Wochentag, und geographische Region charakterisieren.

Abhängig von den mehreren Soll-Werten wird z.B. die Menge von Routen aus dem Satz ausgewählt, die jeweils mit einem Wert der ersten Größe, für die ein Soll-Wert bereitgestellt wird, assoziiert ist, der gleich dem jeweiligen Soll-Wert ist.

Abhängig von den mehreren Soll-Werten wird z.B. die Menge von Routen aus dem Satz ausgewählt, die jeweils mit einem Wert der ersten Größe, für die ein Soll-Wert bereitgestellt wird, assoziiert ist, der um weniger als eine Toleranz vom jeweiligen Soll-Wert abweicht.

Im Beispiel wird für eine nummerische Angabe des Soll-Werts für eine der ersten Größen die Menge von Routen aus dem Satz von Routen ausgewählt, die mit einem Wert der ersten Größe, für die der Soll-Wert vorgegeben wird, assoziiert ist, der gleich dem Soll-Wert ist oder um weniger als eine Toleranz vom Soll-Wert abweicht. Die Toleranz ist z.B. als eine prozentuale Abweichung vorgegeben, z.B. zwischen 1% und 10%, insbesondere 1%, 2%, 5%, 8% oder 10%.

Für eine Angabe des Soll-Werts als Text kann vorgesehen sein, dass der Text der für die Menge ausgewählten Routen mit dem Soll-Wert übereinstimmt.

Im Beispiel wird eine vorgegebene Anzahl von Routen aus dem Satz für die Menge der Routen ausgewählt. Die Anzahl der Routen wird z.B. von einem Benutzer vorgegeben.

Das Verfahren umfasst einen Schritt 308. Im Schritt 308 wird geprüft, ob eine Anzahl der Routen aus dem Satz von Routen, die mit einem Wert der Größe assoziiert sind, der gleich dem Soll-Wert ist oder um weniger als die Toleranz vom Sollwert abweicht, gleich der vorgegebenen Anzahl von Routen ist.

Wenn festgestellt wird, dass eine Anzahl der Routen aus dem Satz von Routen, die mit einem Wert der Größe assoziiert sind, der gleich dem Soll-Wert ist oder um weniger als die Toleranz vom Sollwert abweicht, gleich der vorgegebenen Anzahl von Routen ist, wird ein Schritt 310 ausgeführt. Anderenfalls wird der Schritt 306 ausgeführt, wobei die Anzahl der Routen beispielsweise wie folgt verändert wird:
Wenn festgestellt wird, dass eine Anzahl der Routen aus dem Satz von Routen,
die mit einem Wert der Größe assoziiert sind, der gleich dem Soll-Wert ist oder um weniger als die Toleranz vom Sollwert abweicht, geringer als die vorgegebene Anzahl von Routen ist, wird die Toleranz erhöht.

Das bedeutet, es werden die Routen aus dem Satz von Routen ausgewählt, bis die Anzahl von Routen aus dem Satz von Routen, die mit einem Wert der Größe assoziiert sind, der gleich dem Soll-Wert ist oder um weniger als die erhöhte Toleranz vom Sollwert abweicht, gleich der vorgegebenen Anzahl ist.

Wenn festgestellt wird, dass eine Anzahl der Routen aus dem Satz von Routen, die mit einem Wert der Größe assoziiert sind, der gleich dem Soll-Wert ist oder um weniger als die Toleranz vom Sollwert abweicht, größer als die vorgegebene Anzahl von Routen ist, wird die Toleranz reduziert.

Das bedeutet, es werden die Routen aus dem Satz von Routen ausgewählt, bis die Anzahl von Routen aus dem Satz von Routen, die mit einem Wert der Größe assoziiert sind, der gleich dem Soll-Wert ist oder um weniger als die erhöhte Toleranz vom Sollwert abweicht, gleich der vorgegebenen Anzahl ist.

Es kann vorgesehen sein, dass wenn festgestellt wird, dass eine Anzahl der Routen aus dem Satz von Routen, die mit einem Wert der Größe assoziiert sind, der gleich dem Soll-Wert ist oder um weniger als die Toleranz vom Sollwert abweicht, ungleich der vorgegebenen Anzahl von Routen ist, die Anzahl berechnet wird. Die berechnete Anzahl ersetzt beispielsweise die vom Benutzer vorgegebene Anzahl.

Im Schritt 310 wird wenigstens eine Route für die Erprobung bereitgestellt.

Die wenigstens eine Route für die Erprobung wird aus den Routen aus der Menge von Routen ausgewählt.

Die Routen aus der Menge von Routen werden abhängig von den zweiten Größen in Gruppen unterteilt.

Im Beispiel wird wenigstens eine Route aus wenigstens einer Gruppe für die Erprobung bereitgestellt.

Die Gruppen werden z.B. abhängig von den Werten der zweiten Größen bestimmt.

Die Werte der zweiten Größen werden z.B. je Route aus der Menge von Routen auf Punkte in einem Zustandsraum abgebildet, die mit der jeweiligen Route assoziiert sind. Der Zustandsraum weist im Beispiel folgende fünf Dimensionen auf:
erster Straßentyp,
zweiter Straßentyp,
dritter Straßentyp,
Neigung,
Kurvigkeit.

Kennzahlen für Steigung und Kurvigkeit, sowie die 3 Straßenanteile: Autobahn, Stadt, Land
Im Zustandsraum werden Punktemengen mit einem jeweiligen Schwerpunkt im Zustandsraum bestimmt, die mit je einer der Gruppen assoziiert sind. Der Schwerpunkt ist z.B. der Mittelwert aus den Punkten der Gruppe.

Die jeweilige Punktemenge umfasst die Punkte, die näher zum Schwerpunkt der jeweiligen Punktemenge angeordnet sind, als zu den Schwerpunkten anderer Punktemengen.

Beispielsweise sind die Punktemengen Cluster, die z.B. nach dem k-Means-Algorithmus bestimmt werden.

Eine jeweilige Gruppe der Gruppen umfasst die Routen, die mit den Punkten der Punktemenge assoziiert sind, mit der die jeweilige Gruppe assoziiert ist.

Im Beispiel wird eine vorgegebene Anzahl von Gruppen bestimmt.

Die Anzahl der Gruppen wird z.B. von einem Benutzer vorgegeben.

Die Anzahl der Gruppen wird z.B. automatisch bestimmt. Beispielsweise wird je Gruppe eine Standardabweichung der Werte der jeweiligen zweiten Größen bestimmt, und die Anzahl der Gruppen abhängig von der Standardabweichung vorgegeben.

Es kann vorgesehen sein, dass eine jeweilige Standardabweichung der Werte für wenigstens zwei der zweiten Größen bestimmt wird, wobei die Anzahl der Gruppen abhängig von einer Summe der Standardabweichungen vorgegeben wird. Beispielsweise ist eine nach der Normalisierung bestimmte, gerundete Summe der Standardabweichung der die Anzahl.

Die Normalisierung sieht in einem Beispiel vor der Bestimmung der Gruppen eine Skalierung der Werte der jeweiligen ersten Größe auf den Mittelwert Null mit einer Standardabweichung von 1 vor. Das bedeutet, der Vergleich des Soll-Werts der jeweiligen ersten Größe erfolgt z.B. mit dem Soll-Wert Null.

Beispielsweise wird in einer Gruppe die Route aus der Gruppe ausgewählt, die von einem Punkt repräsentiert wird, der dem Schwerpunkt, insbesondere dem Mittelpunkt, der Punktewolke, die die Gruppe repräsentiert, am nächsten ist.

Es kann vorgesehen sein, dass die Routeneigenschaft für eine Vielzahl von Fahrten bereitgestellt wird. Es kann vorgesehen sein, dass je Fahrt insbesondere aus dem anonymisierten Fahrtenbuch, die wenigstens eine aus dem Satz von Routen, d.h. aus wenigstens einer der Gruppen, ausgewählte Route bestimmt und mit der jeweiligen Fahrt assoziiert gespeichert wird.

Die Routen werden im Beispiel aus einem Satz von Routen ausgewählt, in dem je Route die für die Erprobung gewünschten Routeneigenschaften vollständig enthalten sind. Die Soll-Werte werden im Beispiel aus einem anonymisierten Fahrtenbuch vorgegeben, das die für die Erprobung gewünschten Routeneigenschaften unvollständig umfasst. Die im Fahrtenbuch fehlenden Routeneigenschaften werden in einem Beispiel durch die Routeneigenschaften aus der für die Erprobung bestimmten Route ergänzt. Die Routeneigenschaften können auch durch die Routeneigenschaften aus der für die Erprobung bestimmten Route ersetzt werden.

Es kann vorgesehen sein, dass mehrere Soll-Werte für verschiedene erste Größen vorgegeben werden. Das bedeutet, die Soll-Werte definieren mehrere der Routeneigenschaften, die eine für die Erprobung bestimmte Route erfüllen muss.

Beispielsweise wird eine Fahrt-Route Tabelle erstellt, in der je Fahrt die möglichen ausgewählten Routen gespeichert sind.

Optional umfasst das Verfahren einen Schritt 312. Im Schritt 312 wird die Erprobung mit der wenigstens einen Route durchgeführt.

Beispielsweise wird vom Benutzer oder automatisch z.B. zufällig je Fahrt eine der Routen aus der Tabelle für die Erprobung ausgewählt und die Erprobung mit den ausgewählten Routen durchgeführt.

Es kann vorgesehen sein, dass die Routen abhängig von dem jeweiligen die geographische Region charakterisierenden Routenmerkmal gefiltert werden. Beispielsweise können abhängig von vorgegebenen Stadtgrenzen Routen ausgewählt werden, die innerhalb der Stadtgrenzen liegen. Beispielsweise können abhängig von den Endpunkten der Routen und den Startpunkten der Routen zwei unmittelbar aneinander anschließende Routen ausgewählt und hintereinander zur Erprobung bereitgestellt werden. Die zuerst zu erprobende Route endet beispielsweise in einem Endpunkt, der der Startpunkt der danach zu erprobenden Route ist.

Die Erprobung kann vorsehen das Fahrzeug oder die Fahrzeugkomponente mit einem Lastkollektive zu erproben, das durch die Routen, die für die Erprobung bereitgestellt werden, definiert ist. Dadurch wird ein Versuchsaufwand z.B. bei geringer Varianz reduziert und bei größerer Varianz erhöht und dadurch eine Zuverlässigkeit der Erprobung erhöht.

Durch die geo-referenzierten Telemetriedaten können diese in der Erprobung berücksichtigt werden.

Die Fahrt kann aus einem Fahrtenbuch insbesondere einem anonymisierten Fahrtenbuch entnommen werden. Das Fahrtenbuch kann mehrere Fahrten umfassen. Die Routeneigenschaften der Fahrten aus dem Fahrtenbuch sind unvollständig. Die unvollständigen Routeneigenschaften werden durch Routeneigenschaften aus bereitgestellten Routen erweitert. Die erweiterten Routen können als Eingang für die Erprobung verwendet werden. Dadurch wird eine Datenbasis zur Lastdatengenerierung vergrößert. Die Erprobung umfasst z.B. eine Simulationskette, die eine Nutzung des Fahrzeugs nachbildet und Komponentenbelastungen berechnet. Beispielsweise werden Geschwindigkeitsprofile auf den Routen simuliert. Die Routen können geo-referenzierten Telemetriedaten, insbesondere Kartendaten, Geschwindigkeitsbeschränkungen, Steigungen, Straßentyp, Stoppereignisse umfassen. Beispielsweise ist das Geschwindigkeitsprofil der Eingang der Simulationskette, die einen Antriebsstrang des Fahrzeugs im Detail nachbildet und eine Belastung der Fahrzeugkomponente berechnet. Beispielsweise wird aus einer Zeitreihe der Belastung eine lokale Schädigung der Fahrzeugkomponente berechnet anhand derer die Zuverlässigkeitsbewertung erfolgt.

## Patentansprüche

1. Computerimplementiertes Verfahren zur Bereitstellung von Routen für eine Erprobung einer Fahrzeugkomponente oder eines Fahrzeugs, **dadurch gekennzeichnet, dass** ein Satz von Routen bereitgestellt wird (304), wobei die Routen jeweils mit Werten von ersten Größen assoziiert sind, wobei die ersten Größen jeweils eine Routeneigenschaft, insbesondere eine Fahrdauer, eine Fahrtlänge, eine Abfahrzeit, einen Wochentag, eine geographische Region, einen Startpunkt oder einen Endpunkt oder geo-referenzierte Telemetriedaten der jeweiligen Route charakterisieren, wobei die Routen jeweils mit Werten von zweiten Größen assoziiert sind, wobei die zweiten Größen jeweils ein Routenmerkmal, insbesondere einen Straßentyp, eine Neigung oder eine Kurvigkeit, der jeweiligen Route charakterisieren, wobei für eine oder vorzugsweise mehrere der ersten Größen jeweils ein Soll-Wert bereitgestellt wird (302), wobei abhängig von den Soll-Werten eine Menge von Routen aus dem Satz ausgewählt wird (306), die jeweils mit einem jeweiligen Wert der ersten Größe, für die ein Soll-Wert bereitgestellt wird, assoziiert ist, der gleich dem jeweiligen Soll-Wert ist oder um weniger als eine Toleranz vom jeweiligen Soll-Wert abweicht, wobei Routen aus der Menge von Routen abhängig von den zweiten Größen in Gruppen unterteilt werden und wobei, vorzugsweise je Gruppe, wenigstens eine Route für die Erprobung bereitgestellt wird.

2. Verfahren nach Anspruch 1, **dadurch gekennzeichnet, dass** eine vorgegebene Anzahl von Routen aus dem Satz ausgewählt wird (306), wobei die Menge von Routen die vorgegebene Anzahl von Routen umfasst, und/oder dass die Menge von Routen in eine vorgegebene Anzahl von Gruppen unterteilt wird (306).

3. Verfahren nach Anspruch 2, **dadurch gekennzeichnet, dass** der Soll-Wert für die erste Größe bereitgestellt wird (302), wobei, wenn festgestellt wird, dass eine Anzahl der Routen aus dem Satz von Routen, die mit einem Wert der ersten Größe assoziiert sind, der gleich dem Soll-Wert ist oder um weniger als die Toleranz vom Soll-Wert abweicht, gleich der vorgegebenen Anzahl von Routen ist, die vorgegebene Anzahl von Routen für die Menge von Routen bereitgestellt wird (306), oder dass der Soll-Wert für die mehreren ersten Größen bereitgestellt wird (302), wobei, wenn festgestellt wird, dass eine Anzahl der Routen aus dem Satz von Routen bereitgestellt wird (306), die mit Werten der ersten Größen assoziiert sind, die jeweils gleich dem für die jeweilige erste Größe vorgegebenen Soll-Wert sind, oder um weniger als die Toleranz vom jeweils vorgegebenen Soll-Wert abweichen, gleich der vorgegebenen Anzahl von Routen ist, die vorgegebene Anzahl von Routen für die Menge von Routen bereitgestellt wird (306).

4. Verfahren nach Anspruch 2 oder 3, **dadurch gekennzeichnet, dass** der Soll-Wert für die erste Größe bereitgestellt wird (302), wobei, wenn festgestellt wird, dass eine Anzahl der Routen aus dem Satz von Routen, die mit einem Wert der ersten Größe assoziiert sind, der gleich dem Soll-Wert ist oder um weniger als die Toleranz vom Sollwert abweicht, geringer als die vorgegebene Anzahl von Routen ist, die Toleranz erhöht und die Routen aus dem Satz von Routen ausgewählt werden (306), bis die Anzahl von Routen aus dem Satz von Routen, die mit einem Wert der ersten Größe assoziiert sind, der gleich dem Soll-Wert ist oder um weniger als die erhöhte Toleranz vom Sollwert abweicht, gleich der vorgegebenen Anzahl ist oder dass der Soll-Wert für die mehreren ersten Größen bereitgestellt wird (302), wobei, wenn festgestellt wird, dass eine Anzahl der Routen aus dem Satz von Routen bereitgestellt wird (306), die mit Werten der ersten Größen assoziiert sind, die jeweils gleich dem für die jeweilige erste Größe vorgegebenen Soll-Wert sind, oder um weniger als die Toleranz vom jeweils vorgegebenen Soll-Wert abweichen, geringer als die vorgegebene Anzahl von Routen ist, die Toleranz erhöht und die Routen aus dem Satz von Routen ausgewählt werden (306), bis die Anzahl von Routen aus dem Satz von Routen, die mit Werten der ersten Größen assoziiert sind, die jeweils gleich dem für die jeweilige erste Größe vorgegebenen Soll-Wert sind, oder um weniger als die Toleranz vom jeweils vorgegebenen Soll-Wert abweichen, gleich der vorgegebene Anzahl von Routen ist.

5. Verfahren nach einem der Ansprüche 2 bis 4, **dadurch gekennzeichnet, dass** der Soll-Wert für die erste Größe bereitgestellt wird, wobei, wenn festgestellt wird, dass eine Anzahl der Routen aus dem Satz von Routen, die mit einem Wert der ersten Größe assoziiert sind, der gleich dem Soll-Wert ist oder um weniger als die Toleranz vom Sollwert abweicht, größer als die vorgegebene Anzahl von Routen ist, die Toleranz reduziert und die Routen aus dem Satz von Routen ausgewählt werden (306), bis die Anzahl von Routen aus dem Satz von Routen, die mit einem Wert der ersten Größe assoziiert sind, der gleich dem Soll-Wert ist oder um weniger als die erhöhte Toleranz vom Sollwert abweicht, gleich der vorgegebenen Anzahl ist, oder dass der Soll-Wert für die mehreren ersten Größen bereitgestellt wird (302), wobei, wenn festgestellt wird, dass eine Anzahl der Routen aus dem Satz von Routen bereitgestellt wird (306), die mit Werten der ersten Größen assoziiert sind, die jeweils gleich dem für die jeweilige erste Größe vorgegebenen Soll-Wert sind, oder um weniger als die Toleranz vom jeweils vorgegebenen Soll-Wert abweichen, größer als die vorgegebene Anzahl von Routen ist, die Toleranz reduziert und die Routen aus dem Satz von Routen ausgewählt werden (306), bis die Anzahl von Routen aus dem Satz von Routen, die mit Werten der ersten Größen assoziiert sind, die jeweils gleich dem für die jeweilige erste Größe vorgegebenen Soll-Wert sind, oder um weniger als die Toleranz vom jeweils vorgegebenen Soll-Wert abweichen, gleich der vorgegebene Anzahl von Routen ist.

6. Verfahren nach einem der Ansprüche 2 bis 5, **dadurch gekennzeichnet, dass** die Anzahl der Gruppen von einem Benutzer vorgegeben wird (310) oder dass eine Varianz, insbesondere Standardabweichung, der Werte einer der zweiten Größen bestimmt wird, und die Anzahl der Gruppen abhängig von der Varianz, insbesondere der Standardabweichung, vorgegeben wird (310).

7. Verfahren nach Anspruch 6, **dadurch gekennzeichnet, dass** eine jeweilige Varianz, insbesondere Standardabweichung, der Werte für wenigstens zwei der zweiten Größen bestimmt wird, wobei die Anzahl der Gruppen abhängig von einer Summe der Varianzen, insbesondere Standardabweichungen, vorgegeben wird (310).

8. Verfahren nach einem der vorherigen Ansprüche, **dadurch gekennzeichnet, dass** der für die eine oder vorzugsweise mehrere der ersten Größen jeweils bereitgestellte Soll-Wert aus einer Fahrt in einem Fahrtenbuch entnommen wird, wobei die Fahrt die Routeneigenschaften, insbesondere die Fahrdauer, die Fahrtlänge, die Abfahrzeit, den Wochentag, die geographische Region, den Startpunkt oder den Endpunkt oder die geo-referenzierten Telemetriedaten der Route, unvollständig, insbesondere ohne die geographische Region, ohne den Startpunkt und/oder ohne den Endpunkt und/oder ohne die geo-referenzierten Telemetriedaten der Route, definiert, wobei die bereitgestellte Route die im Fahrtenbuch unvollständig definierten Routeneigenschaften der Fahrt definiert, und wobei die unvollständigen Routeneigenschaften der Fahrt durch die Routeneigenschaften aus der bereitgestellten Route ergänzt oder die Routeneigenschaften der Fahrt aus dem Fahrtenbuch durch die Routeneigenschaften der bereitgestellten Route ersetzt werden.

9. Verfahren nach einem der vorherigen Ansprüche, **dadurch gekennzeichnet, dass** die Routeneigenschaft für eine Vielzahl von Fahrten bereitgestellt wird, wobei je Fahrt, die wenigstens eine Route aus dem Satz von Routen für die Erprobung bereitgestellt und mit der jeweiligen Fahrt assoziiert gespeichert wird (310).

10. Verfahren nach einem der vorherigen Ansprüche, **dadurch gekennzeichnet, dass** wobei je Gruppe wenigstens eine Route für die Erprobung bereitgestellt wird (310) oder dass die Erprobung mit wenigstens einer Route je Gruppe durchgeführt wird (312).

11. Verfahren nach einem der vorherigen Ansprüche, **dadurch gekennzeichnet, dass** die Werte der zweiten Größen je Route aus der Menge von Routen auf Punkte in einem Zustandsraum abgebildet werden, die mit der jeweiligen Route assoziiert sind, wobei Punktemengen mit einem jeweiligen Schwerpunkt im Zustandsraum bestimmt werden, die mit je einer der Gruppen assoziiert sind, wobei die jeweilige Punktemenge die Punkte umfasst, die näher zum Schwerpunkt der jeweiligen Punktemenge angeordnet sind, als zu den Schwerpunkten anderer Punktemengen, wobei eine jeweilige Gruppe der Gruppen die Routen umfasst, die mit den Punkten der Punktemenge assoziiert sind, mit der die jeweilige Gruppe assoziiert ist.

12. Vorrichtung (100) zur Bereitstellung von Routen für eine Erprobung einer Fahrzeugkomponente oder eines Fahrzeugs, **dadurch gekennzeichnet, dass** die Vorrichtung (100) wenigstens einen Prozessor (102) und wenigstens einen Speicher (104) umfasst, wobei der wenigstens eine Speicher (104) vom wenigstens einen Prozessor (102) ausführbare Instruktionen umfasst, bei deren Ausführung durch den wenigstens einen Prozessor (102) die Vorrichtung (100) das Verfahren nach einem der Ansprüche 1 bis 11 ausführt.

13. Computerprogramm, **dadurch gekennzeichnet, dass** das Computerprogramm computerlesbare Instruktionen umfasst, bei deren Ausführung durch einen Computer auf dem Computer das Verfahren nach einem der Ansprüche 1 bis 11 ausgeführt wird.

14. Datenstruktur zur Bereitstellung von Routen für eine Erprobung einer Fahrzeugkomponente oder eines Fahrzeugs, **dadurch gekennzeichnet, dass** die Datenstruktur Datenfelder umfasst, wobei die Datenstruktur in Datenfeldern einen Satz von Routen bereitstellt, wobei die Routen jeweils mit Werten von ersten Größen assoziiert sind, wobei die ersten Größen jeweils eine Routeneigenschaft, insbesondere eine Fahrdauer, eine Fahrtlänge, eine Abfahrzeit, einen Wochentag, eine geographische Region, einen Startpunkt oder einen Endpunkt oder geo-referenzierte Telemetriedaten der jeweiligen Route charakterisieren, wobei die Routen jeweils mit Werten von zweiten Größen assoziiert sind, wobei die zweiten Größen jeweils ein Routenmerkmal, insbesondere einen Straßentyp, eine Neigung oder eine Kurvigkeit, der jeweiligen Route charakterisieren, wobei die Datenstruktur Datenfelder für eine abhängig von einem Soll-Wert für die ersten Größen aus dem Satz ausgewählte Menge von Routen bereitgestellt wird, die Routen umfasst, die mit einem Wert der ersten Größe, für die der Soll-Wert bereitgestellt wird, assoziiert sind, der gleich dem Soll-Wert ist oder um weniger als eine Toleranz vom Sollwert abweicht, wobei die Datenstruktur Datenfelder für Gruppen von Routen umfasst, in die Routen aus der Menge von Routen abhängig von den zweiten Größen unterteilt werden, wobei die Datenstruktur Datenfelder für Werte der zweiten Größen je Route umfasst und wobei die Datenstruktur Datenfelder für vorzugsweise je Gruppe wenigstens eine Route umfasst, die für die Erprobung bereitgestellt wird.

15. Datenstruktur nach Anspruch 14, wobei die Datenstruktur Datenfelder für Werte der zweiten Größen je Route, die aus der Menge von Routen auf Punkte in einem Zustandsraum abgebildet werden, aufweist, die mit der jeweiligen Route assoziiert sind, wobei die Datenstruktur Datenfelder für Punktemengen mit einem jeweiligen Schwerpunkt im Zustandsraum umfasst, die mit je einer der Gruppen assoziiert sind, wobei die jeweilige Punktemenge die Punkte umfasst, die näher zum Schwerpunkt der jeweiligen Punktemenge angeordnet sind, als zu den Schwerpunkten anderer Punktemengen, wobei eine jeweilige Gruppe der Gruppen die Routen umfasst, die mit den Punkten der Punktemenge assoziiert sind, mit der die jeweilige Gruppe assoziiert ist.
